# EUROPÄISCHE PATENTSCHRIFT

(11) **EP 3 523 794 B1**
(45) Veröffentlichungstag und Bekanntmachung des Hinweises auf die Patenterteilung: **24.04.2024**
(21) Anmeldenummer: 17772689.0
(22) Anmeldetag: 22.09.2017
(51) Int. Cl.: G09F 13/06, G09F 13/08, G09F 21/04, B32B 27/00, B60Q 3/14

(54) **ANZEIGEELEMENT MIT ÜBERGANGSKASCHIERUNG VON PARTIELLEN FOLIEN UND LACKIERUNGEN**
DISPLAY ELEMENT WITH TRANSITION LAMINATION OF PARTIAL FILMS AND COATINGS
ÉLÉMENT D'AFFICHAGE DOTÉ D'UN REVÊTEMENT DE TRANSITIONS DE FILMS PARTIELS ET D'ENDUCTIONS DE VERNIS

(30) Priorität: 05.10.2016 DE 102016219288
(43) Veröffentlichungstag der Anmeldung: 14.08.2019
(73) Patentinhaber: Bayerische Motoren Werke Aktiengesellschaft, 80809 München (DE)
(72) Erfinder: HAID, Jochen, 80992 München (DE)
(86) Internationale Anmeldenummer: PCT/EP2017/073966
(87) Internationale Veröffentlichungsnummer: WO 2018/065231

(56) Entgegenhaltungen:
- EP-A1- 2 208 645
- EP-A1- 2 208 645
- DE-A1-102009 032 815
- GB-A- 2 243 013
- JP-A- 2000 089 698
- US-A- 5 453 339

## Beschreibung

Die Erfindung betrifft ein Anzeigeelement mit einer Anzeigesymbolik.

Dieser Typ von Anzeigeelementen ist unter anderem im Kfz-Bereich weitverbreitet. Beispielsweise wird er bei Bedienelementen wie Gangwahlhebeln oder Knöpfen im Bereich der Infotainment- und Warnsysteme oder auch bei reinen Informationsanzeigen im Bereich der Infotainment-, Warn- oder Klimasysteme eingesetzt. Informationen sollen den Fahrzeuginsassen bzw. den jeweiligen Betrachtern bei verschiedenen Lichtverhältnissen klar erkennbar dargestellt werden. Dabei soll diese Informationsdarstellung auf eine optisch ansprechende Art und Weise erfolgen und dennoch einfach und kostengünstig herzustellen sein.

Zu diesem Zweck werden mehrere Schichten von Farbe oder Folie mit unterschiedlichen Eigenschaften auf eine Trägerschicht aufgebracht. Um den dadurch entstehenden Oberflächen ein optisch einheitliches Erscheinungsbild zu verleihen, werden die Schichten farblich und bezüglich ihres Erscheinungsbildes genau aufeinander angepasst. Die Farbe und das Erscheinungsbild einer Oberfläche sind jedoch stark von einzelnen Herstellchargen oder Lieferanten abhängig. Daher soll eine Möglichkeit gefunden werden, den harten Übergang zwischen verschiedenen Schichten bzw. Erscheinungsbildern zu kaschieren und dadurch fließend erscheinen zu lassen.

Aus dem Stand der Technik sind bereits verschiedene Ausführungsformen zur Übergangskaschierung zwischen Schichten bekannt. Die Lehre der DE 103 32 550 B4 zeigt anhand einer laminierten Windschutzscheibe eine Schicht, die sich über eine sich verändernde Lichtdurchlässigkeit ihrer Trägerschicht anpasst und in das optische Erscheinungsbild der Trägerschicht übergeht. Jedoch wird dadurch meist weder ein optisch einheitliches Erscheinungsbild, noch eine Informationsanzeige bei wechselnden Lichtverhältnissen erreicht. Sowohl die DE 10 2010 034 714 A1 als auch die DE 10 2010 030 911 A1 zeigen jeweils Verfahren zur Herstellung von Bauteilen mit unterschiedlichen Oberflächenschichten und deren Übergang. Es entstehen jedoch bei beiden Verfahren meist deutlich erkennbare Übergangsbereiche, in denen die Oberflächenschichten scharf entlang einer Kante voneinander abgegrenzt sind. Es wird hierbei meist weder eine Informationsanzeige ermöglicht, noch ein einheitliches Erscheinungsbild geboten. Die DE 10 2009 032 815 A1 offenbart eine Informationsanzeige hinter einer Lackfolienoberfläche, wodurch ein optisch gleichbleibendes Bild erzeugt wird. Hierfür darf meist jedoch nur eine Folie auf der gesamten Oberfläche verwendet werden, da es sonst zu unerwünschten Uneinheitlichkeiten und Oberflächenübergängen kommen würde. Die Folie muss der gesamten Formgebung des Bauteils folgen, ohne sich im Bereich der Informationswidergabe zu verformen. In vielen Fällen bedeutet dies erhöhten Aufwand bei Design und Fertigung solcher Produkte und zieht einen monetären Mehraufwand in beiden Bereichen nach sich. Die DE 10 2011 001 101 A1 offenbart eine beleuchtete Taste einer Folientastatur. Für die Informationsanzeige in Form von festen Symbolen wird jedoch nur eine Schicht verwendet, da der abzudeckende Bereich gering ist.

Zudem wird durch die JP 2000 089 698 A ein Anzeigeelement gelehrt, welches einander überdeckende und optisch ineinander übergehende Farbschichten aufweist, bei welchem der optische Übergang durch ein in einem Übergangsbereich vorgesehenes Druckmuster realisiert wird.

Der Erfindung liegt deshalb die Aufgabe zugrunde, die Nachteile des Standes der Technik zu überwinden und eine kostengünstige, einfache Lösung zur optisch ansprechenden Informationsdarstellung mittels Anzeigesymbolik auf einer Fläche mit teils komplexer Formgebung bereitzustellen.

Diese Aufgabe wird durch die Merkmalskombination gemäß Patentanspruch 1 gelöst.

Erfindungsgemäß wird hierzu ein Anzeigeelement mit einer Anzeigesymbolik vorgeschlagen. Das Anzeigeelement umfasst eine Trägerschicht auf einer ersten Seite, zumindest eine an der zur ersten Seite abgewandten Seite angeordnete Anzeigeschicht und eine an der Trägerschicht und der Anzeigeschicht angeordnete Abdeckschicht. Die Abdeckschicht bildet mindestens einen Ausschnitt mit einem den mindestens einen Ausschnitt begrenzenden umlaufenden Ausschnittrand, und die Anzeigeschicht einen umlaufenden Außenrand aus. Der mindestens eine Ausschnitt der Abdeckschicht ist von der Anzeigeschicht überdeckt. Die Anzeigeschicht und die Abdeckschicht weisen einen Übergangsbereich zwischen dem umlaufenden Ausschnittrand und dem umlaufenden Außenrand der Anzeigeschicht auf. Die Anzeigeschicht bildet von einem auf der Anzeigeschicht deckungsgleich zu dem umlaufenden Ausschnittrand liegenden Innenrand zu dem umlaufenden Außenrand einen Randbereich aus. Das bedeutet, dass der Innenrand und der Ausschnittsrand für einen Betrachter, der das Anzeigeelement von der Sichtseite her betrachtet, deckungsgleich sind. Eine Farbdichte der Anzeigeschicht nimmt im Randbereich vom Innenrand zum Außenrand ab, sodass ein optisches Erscheinungsbild der Anzeigeschicht fließend in ein optisches Erscheinungsbild der Abdeckschicht übergeht. Ein Ausschnitt der von der Abdeckschicht ausgebildet wird, muss nicht von der Anzeigeschicht überdeckt sein, jedoch überdeckt jede Anzeigeschicht einen Ausschnitt. Die Farbdichte ist hierbei die Anzahl der Pigmente in einem Randbereichsabschnitt und/oder die Deckkraft der Pigmente in einem Randbereichsabschnitt. Durch die Farbdichte wird daher die Transparenz in einem Randbereichsabschnitt bestimmt. Ein Randbereichsabschnitt auf der Anzeigeschicht folgt der Form des Innenrands und umläuft im Randbereich den Innenrand in einem gewissen Abstand. Das Abnehmen der Farbdichte in einem Randbereichsabschnitt ist mit unterschiedlichen Methoden realisierbar. In einer nicht erfindungsgmäßen Ausführung nimmt die Dicke der Schicht vom Innenrand zum Außenrand der Anzeigeschicht ab, sodass ihre Transparenz steigt. Ebenfalls nicht erfindungsgemäß kann jeder Randbereichsabschnitt verschiedene Muster beinhalten, deren Anteil an Farbpigmenten im Vergleich zu einem benachbarten, näher am Innenrand liegenden, Randbereichsabschnitt geringer ist.

Die technische Wirkung der beschriebenen Merkmale erzeugt einen weichen bzw. fließenden Übergang zwischen zwei aufeinander liegenden Schichten. Daraus ergibt sich für den Betrachter von der Sichtseite ein einheitliches Bild der von den beiden Schichten gebildeten Gesamtfläche. Die Gesamtfläche wirkt, als sei sie aus einem Material bzw. einer Schicht und nicht zusammengesetzt. Die Sichtseite ist dabei die Seite der Schichten, die zur Betrachtung des Anzeigeelements im montierten Zustand bestimmt ist.

Eine vorteilhafte Ausführungsform liegt vor, wenn die Anzeigeschicht auf der Trägerschicht und die Abdeckschicht auf der Anzeigeschicht angeordnet ist. Alternativ ist die Abdeckschicht auf der Trägerschicht und die Anzeigeschicht auf der Abdeckschicht angeordnet.

In einer weiter vorteilhaften Ausführungsvariante ist die Trägerschicht ein transparenter Kunststoff. Ein Betrachter bzw. Fahrzeuginsasse betrachtet das Anzeigeelement immer von der abdeckschichtabgewandten Seite der Trägerschicht des Anzeigeelements. Durch die Transparenz der Trägerschicht entsteht dadurch ein Tiefeneffekt, der eine edel und modern anmutende Oberflächenerscheinung schafft.

Ferner sind Weiterbildungsvarianten von Vorteil, bei denen die Trägerschicht eine Oberflächenform des Anzeigeelements bestimmt. Dadurch kann das Anzeigeelement in ein Design des Fahrzeuginnenraums eingearbeitet werden, ohne es durch eine designuntypische Form negativ zu beeinflussen. Desweiteren ist das Anzeigeelement direkt in ein Bedienelement wie Taster, Knopf oder Hebel integrierbar.

Erfindungsgemäß ist ferner vorgesehen, dass die Anzeigeschicht durch eine Folie gebildet ist.

Ein vorteilhaftes Ausführungsbeispiel sieht vor, dass die Abdeckschicht durch eine Folie oder eine Farbschicht gebildet ist. Die Farben und/oder die Transparenz der Folien und/oder Farben der Anzeigeschicht und Abdeckschicht sind ähnlich. Dadurch kann dann ein optisch fast unsichtbarer Übergang zwischen den Schichten geschaffen werden.

Von Vorteil ist eine Weiterbildung, bei der die Farbschicht durch ein Druck- und/oder Lackierverfahren direkt auf der Trägerschicht und/oder der Anzeigeschicht aufgebracht ist. Als Druckverfahren kann der Tampon-Druck dienen.

Eine Weiterbildung ist vorteilhaft, bei der eine erste Pigment- bzw. Farbdichte eines umlaufenden äußeren Abschnitts des Randbereichs entsprechend des Randbereichsabschnitts geringer ist als eine zweite Pigment- bzw. Farbdichte eines näher am Innenrand liegenden umlaufenden inneren Abschnitts des Randbereichs bzw. Randbereichsabschnitts. Dadurch wird die Transparenz der Anzeigeschicht zum Außenrand hin gleichmäßig größer. Liegen die Schichten aufeinander, wirkt es, als ob die ohnehin ähnlichen Farbtöne der Schichten fließend ineinander übergehen.

Eine vorteilhafte Weiterbildungsform sieht vor, dass zumindest auf der trägerschichtabgewandten Seite der Anzeigeschicht ein Beleuchtungselement angeordnet ist, sodass die Anzeigeschicht vom Beleuchtungselement in Richtung der Trägerschicht beleuchtbar ist. Alternativ ist das Beleuchtungselement auf der abdeckschichtabgewandten Seite der Trägerschicht angeordnet. Die Anzeigeschicht bzw. die Abdeckschicht ist bei dieser Anordnung durch die transparente Trägerschicht hindurch beleuchtbar. Durch die alternativen Anordnungen werden die Symbole auf der Anzeigeschicht beleuchtet. Bei schlechten bzw. für die Ablesbarkeit der durch das Anzeigeelement widergegebenen Informationen unvorteilhaften Lichtverhältnissen, z.B. starker Sonneneinstrahlung oder Dunkelheit, sind die Symbole der Anzeigeschicht eingeschränkt erkennbar und werden von dem Beleuchtungselement beleuchtet. Ferner kann ein Beleuchtungselement auch zur Funktionsanzeige dienen. Ein Symbol repräsentiert den Zustand einer Funktion, z.B. Klimaanlage. Soll ein bestimmter Zustand angezeigt werden, z.B. "An", ist das Symbol beleuchtet. Um eine Beleuchtung zur besseren Erkennbarkeit und eine Funktionsanzeige zu unterscheiden, werden mehrere Beleuchtungselemente unterschiedlicher Farbe verwendet. Alternativ oder Zusätzlich kann auch direkt hinter einem Ausschnitt der Abdeckschicht, der nicht von der Anzeigeschicht überdeckt wird, ein Beleuchtungselement zur Funktionsanzeige eines benachbarten Symbols angeordnet sein. Ein System ist beispielsweise durch ein Symbol und eine neben dem Symbol angeordnete Funktionsanzeige repräsentiert. Das Symbol ist zur besseren Ablesbarkeit beleuchtbar. Die Anzeige eines Zustands erfolgt über die daneben angeordnete Funktionsanzeige.

Erfindungsgemäß bildet die Anzeigeschicht mindestens ein erstes Symbol aus, das von der Sichtseite erkennbar ist. Das erste Symbol kann durch ein Druckverfahren, Wärmebehandlung oder Laser ausgebildet sein und in der Farbgebung von der Farbgebung bzw. Farbe der umliegenden Anzeigeschicht abweichen.

Eine vorteilhafte Weiterbildungsvariante sieht vor, dass die Abdeckschicht durch eine Form des Ausschnitts ein zweites Symbol ausbildet, das von der Sichtseite erkennbar ist. Das zweite Symbol kann durch ein Druckverfahren, Wärmebehandlung oder Laser ausgebildet sein und in der Farbgebung von der Farbgebung bzw. Farbe der umliegenden Anzeigeschicht abweichen.

Ferner sieht eine weitere vorteilhafte Weiterbildungsvariante vor, das Beleuchtungselement auf der ersten Seite der Trägerschicht anzuordnen und die Abdeckschicht und die Anzeigeschicht auf der zur ersten Seite der Trägerschicht abgewandten Seite der Trägerschicht anzuordnen. Die Anzeigeschicht und die Abdeckschicht sind dann durch die transparente Trägerschicht durch zumindest ein Beleuchtungselement beleuchtbar.

Die vorstehend offenbarten Merkmale sind beliebig kombinierbar soweit dies technisch möglich ist und diese nicht im Widerspruch zueinander stehen. Andere vorteilhafte Weiterbildungen der Erfindung sind in den Unteransprüchen gekennzeichnet bzw. werden nachstehend zusammen mit der Beschreibung der bevorzugten Ausführung der Erfindung anhand der Figuren näher dargestellt. Es zeigen:
- Fig. 1: eine perspektivische Ansicht eines Gangwahlhebels mit nicht erfindungsgemäßen Anzeigeelement;
- Fig. 2: eine Schnittdarstellung durch ein Anzeigeelement nach Fig. 1;
- Fig. 3: eine Schnittdarstellung durch ein weiteres Anzeigeelement;
- Fig. 4: eine Schnittdarstellung durch ein weiteres Anzeigeelement;
- Fig. 5: eine Draufsicht auf ein Anzeigeelement;
- Fig. 6a - 6c: drei Darstellungen bezüglich des Randbereichs verschieden ausgestalteter Anzeigeschichten.

Die Figuren sind beispielhaft schematisch. Gleiche Bezugszeichen in den Figuren weisen auf gleiche funktionale und/oder strukturelle Merkmale hin.

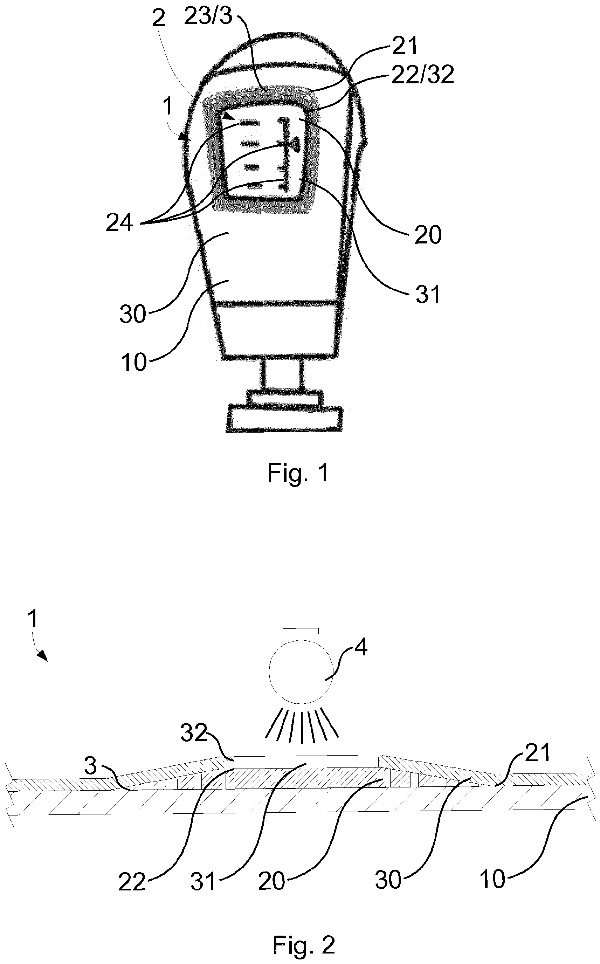

Figur 1 zeigt einen Gangwahlschalter, bei dem ein Teil der Oberfläche von einem nicht erfindungsgemäßen Anzeigeelement 1 bestimmt ist. Zur Anzeige des Betriebszustands des Fahrzeugs (Drive, Neutral, Reverse etc.) ist eine entsprechende Anzeigesymbolik 2 mit mehreren ersten Symbolen 24 von der Anzeigeschicht 20 ausgebildet. Die Anzeigeschicht 20 ist auf der sichtseitenabgewandten Seite der Trägerschicht 10 direkt auf diese aufgebracht. Auf den verbleibenden Bereich der Trägerschicht 10 und zumindest teilweise auf die Anzeigeschicht 20 ist desweiteren die Abdeckschicht 30 aufgebracht, sodass der Ausschnitt 31 über der Anzeigeschicht 20 liegt. Der umlaufende Ausschnittrand 32 der Abdeckschicht bestimmt durch seine Position auf der Anzeigeschicht den Innenrand 22. Vom Innenrand 22 der Anzeigeschicht zum Außenrand 21 der Anzeigeschicht erstreckt sich dabei der Randbereich, in dem die Farbdichte der Anzeigeschicht stufenweise abnimmt. Durch den auf der Abdeckschicht 30 liegenden Randbereich 23 der Anzeigeschicht ist der Übergangsbereich 3 bestimmt. Durch den Randbereich 23 geht die Farbgebung der Anzeigeschicht 20 im Übergangsbereich 3 in die Farbgebung der Abdeckschicht 30 über. Da der Übergang zwischen ähnlichen Farbgebungen der Abdeck- und der Anzeigeschicht stufenweise erfolgt, ist keine Kante zwischen den Schichten erkennbar. Der optische Übergang wird verwischt und mithin eine optisch einheitliche Oberfläche geschaffen.

Figur 2 zeigt das nicht erfindungsgemäße Anzeigeelement aus Figur 1 im Schnitt. Die Anzeigeschicht 20 ist zwischen der transparenten Trägerschicht 10 und der Abdeckschicht 30 angeordnet. Zusätzlich ist ein Beleuchtungselement 4 schematisch dargestellt, das den Ausschnitt 31 von der sichtseitenabgewandten Seite anstrahlt. Die Randbereich der Anzeigeschicht 20 nimmt vom Innenrand 22 der deckungsgleich mit dem umlaufenden Ausschnittrand 32 ist, zum Außenrand 21 hin ab. Dadurch erhöht sich die Transparenz zum Außenrand hin und die dahinterliegende Abdeckschicht 30 ist besser sichtbar. Alternativ ist das Beleuchtungselement 4 auf der Trägerschichtseite anordenbar, wodurch die Anzeigeschicht durch die transparente Trägerschicht beleuchtbar ist und die Sichtseite auf der Abdeckschichtseite liegt.

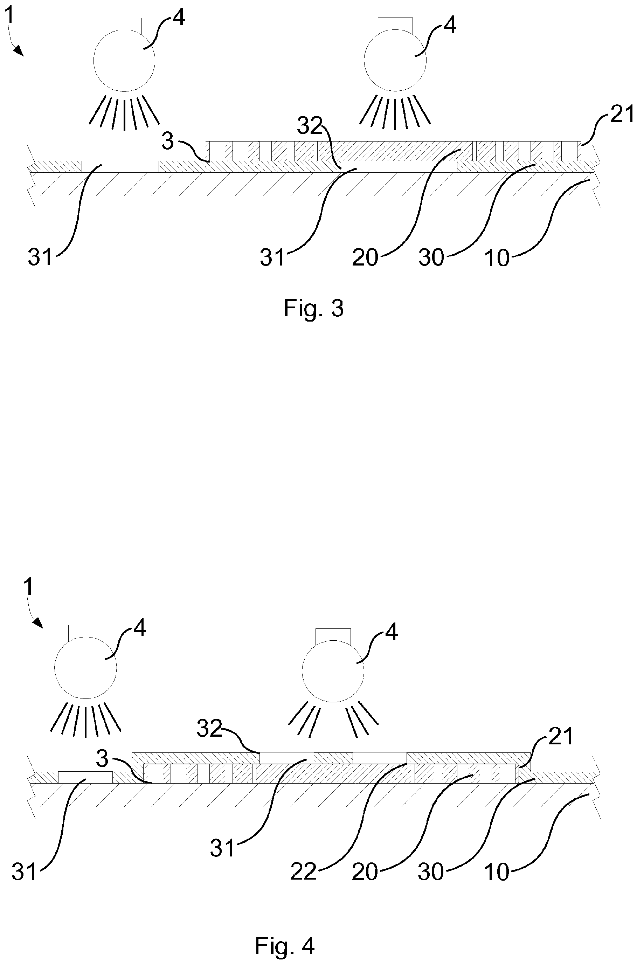

Figur 3 zeigt ein Anzeigeelement, bei dem die Abdeckschicht 30 mit mehreren Ausschnitten 31 direkt auf der Trägerschicht 10 angeordnet ist. Hinter einem Teil der Ausschnitte 31 liegt die Anzeigeschicht 20 auf der sichtseitenabgewandten Seite der Abdeckschicht 30. Um im Gegenlicht der Beleuchtung, durch die Beleuchtungselemente 4, der Ausschnitte 31 keine Kanten von der Sichtseite der Trägerschicht 10 erkennbar zu machen, ist der Randbereich der Anzeigeschicht 20 so ausgebildet, dass es im Übergangsbereich 3 zwischen Ausschnittrand 32 und Außenrand 21 der Anzeigeschicht 20 zu einem Übergang zwischen den Farben kommt. Die Anzeigeschicht ist beispielsweise weiß, die Abdeckschicht schwarz. Durch die Form der Ausschnitte 31 wird die Form eines Symbols, seine Farbe durch die Farbe der Anzeigeschicht bestimmt. Zur besseren Ablesbarkeit bei schlechten Lichtverhältnissen ist das Symbol durch das Beleuchtungselement 4 beleuchtbar. Eine Funktionsanzeige erfolgt über den Ausschnitt, hinter dem direkt ein Beleuchtungselement 4 angeordnet ist. Alternativ sind die Beleuchtungselemente 4 auf der Trägerschichtseite anordenbar, wodurch die Anzeigeschicht und die Abdeckschicht durch die transparente Trägerschicht beleuchtbar ist und die Sichtseite auf der Abdeckschichtseite liegt.

Figur 4 zeigt ein Anzeigeelement mit ähnlichem Aufbau wie in Figur 3, jedoch umfasst die Anzeigeschicht 20 zwei Anzeigebereiche. Die Form der Ausschnitte 31 der Abdeckschicht kann dabei die Form der Anzeigesymbolik 2 bestimmen, welche durch eine Beleuchtung sichtbar wird. Alternativ werden durch eine identische Anzeigesymbolik 2, welche in die Anzeigeschicht 20 eingebracht ist und durch die Beleuchtung der auf Abdeckschicht 30 und Anzeigeschicht 20 ausgebildeten Symbolik gut sichtbare und ablesbare Informationen mit scharf abgegrenzten Kanten für den Betrachter bereitgestellt.

Die Beleuchtung oder die Beleuchtung des Ausschnitts 31, welcher nicht im Bereich der Anzeigeschicht 20 liegt, dient alternativ der Funktionsanzeige. In den beiden nicht abgedeckten Bereichen der Anzeigeschicht 20 ist alternativ eine unterschiedliche Anzeigesymbolik 2 einbringbar. Hierdurch werden mehrere Informationen angezeigt und durch die Beleuchtung 4 beleuchtet.

Alternativ sind die Beleuchtungselemente 4 auf der Trägerschichtseite anordenbar, wodurch die Anzeigeschicht und die Abdeckschicht durch die transparente Trägerschicht beleuchtbar ist und die Sichtseite auf der Abdeckschichtseite liegt.

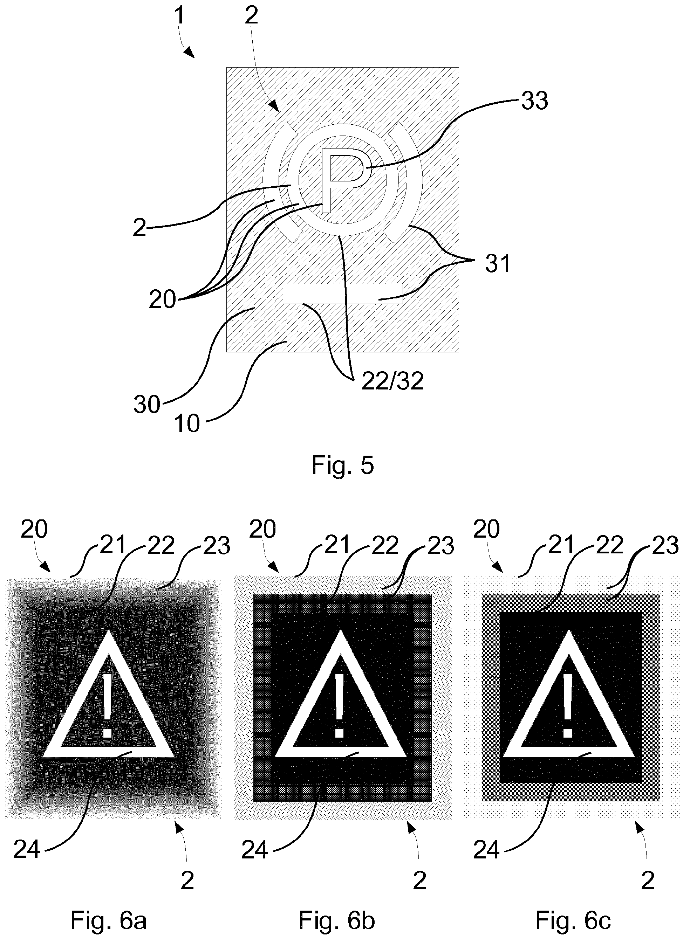

Figur 5 zeigt ein Anzeigeelement 1 mit Anzeigesymbolik 2 aus der Draufsicht, wobei hinter der transparenten Trägerschicht 10 die Abdeckschicht 30 sichtbar ist. In die Abdeckschicht 30 ist durch ein Laserverfahren ein Ausschnitt 31 in Form einer Symbolik 33 eingebracht, die von der Anzeigeschicht 20 abgedeckt ist. Ein weiterer Ausschnitt 31 dient der Funktionsanzeige.

Die Figuren 6a bis 6c zeigen jeweils eine Anzeigeschicht 20, bei denen der Randbereich 23, der sich jeweils vom Innenrand 22 bis zum Außenrand 21 erstreckt, unterschiedlich ausgeführt ist. In Figur 6a läuft der Randbereich scheinbar gleichmäßig aus. Dafür sind die Randbereichsabschnitte sehr klein gewählt und die Anzahl der Farbpigmente wird in jedem Randbereichsabschnitt gegenüber einem direkt benachbarten näher am Innenrand liegenden Randbereichsabschnitt geringer. In Figuren 6b und 6c sind die Randbereichsabschnitte nicht erfindungsgemäß jeweils mit unterschiedlichen Mustern ausgebildet. Ein Muster hat bezogen auf seinen Randbereichsabschnitt eine gleichmäßige Verteilung der Farbpigmente bzw. Farbdichte. Das Muster ist bei einem näher am Innenrand liegenden Randbereichsabschnitt dichter und enthält mehr Farbpigmente als ein Randbereichsabschnitt, der näher am Außenrand liegt. Hierdurch entsteht ein optisches Bild des Farbverlaufs und der Übergang zwischen der Anzeigeschicht 20 und der Abdeckschicht 30 im Übergangsbereich wirkt nahezu nahtlos.

Die Erfindung beschränkt sich in ihrer Ausführung nicht auf die vorstehend angegebenen bevorzugten Ausführungsbeispiele. Vielmehr ist eine Anzahl von Varianten denkbar, welche von der dargestellten Lösung auch bei grundsätzlich anders gearteten Ausführungen Gebrauch macht. Beispielsweise ist ein Randbereich mit Abschnitten unterschiedlicher Farbdichte und/oder Transparenz auch in der Abdeckschicht möglich.

## Patentansprüche

1. Anzeigeelement (1) mit einer Anzeigesymbolik (2), umfassend eine Trägerschicht (10) auf einer ersten Seite, zumindest eine an der zur ersten Seite abgewandten Seite angeordnete Anzeigeschicht (20) und eine an der Trägerschicht (10) und der Anzeigeschicht (20) angeordnete Abdeckschicht (30), wobei
die Abdeckschicht (30) mindestens einen Ausschnitt (31) mit einem den mindestens einen Ausschnitt begrenzenden umlaufenden Ausschnittrand (32) ausbildet,
die Anzeigeschicht (20) einen umlaufenden Außenrand (21) ausbildet,
und der mindestens eine Ausschnitt (31) der Abdeckschicht (30) von der Anzeigeschicht (20) überdeckt ist,
wobei die Anzeigeschicht (20) und die Abdeckschicht (30) einen Übergangsbereich (3) zwischen dem umlaufenden Ausschnittrand (32) und dem umlaufenden Außenrand (21) der Anzeigeschicht (20) aufweisen und die Anzeigeschicht (20) einen Randbereich (23) ausbildet, der sich von dem umlaufenden Außenrand (21) zu einem Innenrand (22) erstreckt,
**dadurch gekennzeichnet, dass**
die Anzeigeschicht (20) durch eine Folie gebildet ist, welche mindestens ein erstes Symbol (24) ausbildet, das von einer Sichtseite erkennbar ist,
der Innenrand (22) auf der Anzeigeschicht (20) deckungsgleich zu dem umlaufenden Ausschnittrand (32) liegt und eine eine Transparenz der Anzeigeschicht (20) im Randbereich (23) bestimmende Farbdichte der Anzeigeschicht (20) im Randbereich (23) vom Innenrand (22) zum Außenrand (21) fließend abnimmt, sodass ein optisches Erscheinungsbild der Anzeigeschicht (20) fließend in ein optisches Erscheinungsbild der Abdeckschicht (30) übergeht.

2. Anzeigeelement (1) nach Anspruch 1, wobei die Anzeigeschicht (20) auf der Trägerschicht (10) und die Abdeckschicht (30) auf der Anzeigeschicht (20) angeordnet ist oder die Abdeckschicht (30) auf der Trägerschicht (10) und die Anzeigeschicht (20) auf der Abdeckschicht (30) angeordnet ist.

3. Anzeigeelement (1) nach Anspruch 1 oder 2, wobei die Trägerschicht (10) ein transparenter Kunststoff ist.

4. Anzeigeelement (1) nach einem der vorhergehenden Ansprüche, wobei die Trägerschicht eine Oberflächenform des Anzeigeelements (1) bestimmt.

5. Anzeigeelement (1) nach einem der vorhergehenden Ansprüche, wobei die Abdeckschicht (30) durch eine Folie oder eine Farbschicht gebildet ist.

6. Anzeigeelement (1) nach Anspruch 5, wobei die Farbschicht durch ein Druck- und/oder Lackierverfahren direkt auf der Trägerschicht (10) und/oder der Anzeigeschicht (20) aufgebracht ist.

7. Anzeigeelement (1) nach einem der vorhergehenden Ansprüche, wobei eine erste Pigmentdichte eines umlaufenden äußeren Abschnitts des Randbereichs (23) geringer ist als eine zweite Pigmentdichte eines näher am Innenrand (22) liegenden umlaufenden inneren Abschnitts des Randbereichs (23).

8. Anzeigeelement (1) nach einem der vorhergehenden Ansprüche, wobei zumindest auf der trägerschichtabgewandten Seite der Anzeigeschicht (20) ein Beleuchtungselement angeordnet ist, sodass die Anzeigeschicht (20) vom Beleuchtungselement in Richtung der der Trägerschicht (10) beleuchtbar ist, oder wobei auf der abdeckschichtabgewandten Seite der Trägerschicht (10) ein Beleuchtungselement angeordnet ist, sodass die Anzeigeschicht (20) vom Beleuchtungselement aus Richtung der Trägerschicht (10) beleuchtbar ist.

9. Anzeigeelement (1) nach einem der vorhergehenden Ansprüche, wobei die Abdeckschicht (30) durch eine Form des Ausschnitts (31) ein zweites Symbol (33) ausbildet, das von einer Sichtseite erkennbar ist.

## Claims

1. Display element (1) having a symbol display (2), comprising a carrier layer (10) on a first side, at least one display layer (20) arranged on the side facing away from the first side, and a cover layer (30) arranged on the carrier layer (10) and the display layer (20), wherein
the cover layer (30) forms at least one cutout (31) with a circumferential cutout periphery (32) delimiting the at least one cutout,
the display layer (20) forms a circumferential outer periphery (21),
and the at least one cutout (31) in the cover layer (30) is covered by the display layer (20),
wherein the display layer (20) and the cover layer (30) have a transition region (3) between the circumferential cutout periphery (32) and the circumferential outer periphery (21) of the display layer (20), and the display layer (20) forms a peripheral region (23) which extends from the circumferential outer periphery (21) to an inner periphery (22),
**characterized in that**
the display layer (20) is made from a film which forms at least one first symbol (24), which is perceivable from a viewing side,
the inner periphery (22) on the display layer (20) is congruent with the circumferential cutout periphery (32) and an ink density of the display layer (20) which determines a transparency of the display layer (20) in the peripheral region (23) smoothly decreases in the peripheral region (23) from the inner periphery (22) to the outer periphery (21) in a manner such that a visual appearance of the display layer (20) smoothly transitions into a visual appearance of the cover layer (30).

2. Display element (1) according to Claim 1, wherein the display layer (20) is arranged on the carrier layer (10) and the cover layer (30) is arranged on the display layer (20), or the cover layer (30) is arranged on the carrier layer (10) and the display layer (20) is arranged on the cover layer (30).

3. Display element (1) according to Claim 1 or 2, wherein the carrier layer (10) is a transparent plastics material.

4. Display element (1) according to any of the preceding claims, wherein the carrier layer determines a surface shape of the display element (1).

5. Display element (1) according to any of the preceding claims, wherein the cover layer (30) is made of a film or an ink layer.

6. Display element (1) according to Claim 5, wherein the ink layer is applied directly on the carrier layer (10) and/or the display layer (20) using a printing and/or coating method.

7. Display element (1) according to any of the preceding claims, wherein a first pigment density of a circumferential outer portion of the peripheral region (23) is less than a second pigment density of a circumferential inner portion of the peripheral region (23), which is located closer to the inner periphery (22) .

8. Display element (1) according to any of the preceding claims, wherein an illumination element is arranged at least on the side of the display layer (20) facing away from the carrier layer in a manner such that the display layer (20) is illuminable by the illumination element in the direction of the carrier layer (10), or wherein an illumination element is arranged on the side of the carrier layer (10) facing away from the cover layer in a manner such that the display layer (20) is illuminable by the illumination element from the direction of the carrier layer (10).

9. Display element (1) according to any of the preceding claims, wherein the cover layer (30) forms, due to a shape of the cutout (31), a second symbol (33), which is perceivable from a viewing side.

## Revendications

1. Élément d'affichage (1) doté de symboles d'affichage (2), comprenant une couche support (10) sur une première face, au moins une couche d'affichage (20) disposée sur la face opposée à la première face et une couche de recouvrement (30) disposée sur la couche support (10) et la couche d'affichage (20), dans lequel
la couche de recouvrement (30) forme au moins une découpe (31) dotée d'un bord de découpe (32) périphérique délimitant l'au moins une découpe,
la couche d'affichage (20) forme un bord extérieur (21) périphérique,
et l'au moins une découpe (31) de la couche de recouvrement (30) est recouverte par la couche d'affichage (20),
dans lequel la couche d'affichage (20) et la couche de recouvrement (30) comportent une zone de transition (3) entre le bord de découpe (32) périphérique et le bord extérieur (21) périphérique de la couche d'affichage (20), et la couche d'affichage (20) forme une zone de bord (23) qui s'étend depuis le bord extérieur (21) périphérique jusqu'à un bord intérieur (22), **caractérisé en ce que**
la couche d'affichage (20) est constituée d'un film qui forme au moins un premier symbole (24) qui est reconnaissable depuis une face d'aspect,
le bord intérieur (22) se trouve sur la couche d'affichage (20) en coïncidence avec le bord de découpe (32) périphérique et une densité de couleur de la couche d'affichage (20) déterminant une transparence de la couche d'affichage (20) dans la zone de bord (23) diminue de manière progressive dans la zone de bord (23) depuis le bord intérieur (22) vers le bord extérieur (21), de sorte qu'un aspect optique de la couche d'affichage (20) réalise une transition progressive vers une image d'aspect optique de la couche de recouvrement (30).

2. Élément d'affichage (1) selon la revendication 1, dans lequel la couche d'affichage (20) est disposée sur la couche support (10) et la couche de recouvrement (30) est disposée sur la couche d'affichage (20) ou la couche de recouvrement (30) est disposée sur la couche support (10) et la couche d'affichage (20) est disposée sur la couche de recouvrement (30).

3. Élément d'affichage (1) selon la revendication 1 ou 2, dans lequel la couche support (10) est une matière plastique transparente.

4. Élément d'affichage (1) selon l'une des revendications précédentes, dans lequel la couche support détermine une forme de surface de l'élément d'affichage (1) .

5. Élément d'affichage (1) selon l'une des revendications précédentes, dans lequel la couche de recouvrement (30) est formée par un film ou une couche de couleur.

6. Élément d'affichage (1) selon la revendication 5, dans lequel la couche de couleur est appliquée directement sur la couche support (10) et/ou sur la couche d'affichage (20) par un procédé d'impression et/ou de peinture.

7. Élément d'affichage (1) selon l'une des revendications précédentes, dans lequel une première densité de pigment d'une partie extérieure périphérique de la zone de bord (23) est inférieure à une seconde densité de pigment d'une partie intérieure périphérique de la zone de bord (23) située plus près du bord intérieur (22) .

8. Élément d'affichage (1) selon l'une des revendications précédentes, dans lequel un élément d'éclairage est disposé au moins sur la face de la couche d'affichage (20) qui est opposée à la couche support, de sorte que la couche d'affichage (20) peut être éclairée par l'élément d'éclairage en direction de la couche support (10), ou dans lequel un élément d'éclairage est disposé sur la face de la couche support (10) qui est opposée à la couche de recouvrement, de sorte que la couche d'affichage (20) peut être éclairée par l'élément d'éclairage en direction de la couche support (10).

9. Élément d'affichage (1) selon l'une des revendications précédentes, dans lequel la couche de recouvrement (30) forme, par une forme de la découpe (31), un second symbole (33) reconnaissable depuis une face d'aspect.
